# EUROPÄISCHE PATENTANMELDUNG

(11) **EP 4 592 089 A1**
(43) Veröffentlichungstag der Anmeldung: **30.07.2025**
(21) Anmeldenummer: 24154460.0
(22) Anmeldetag: 29.01.2024
(51) Int. Cl.: B44D 3/02, B44D 3/00, G09B 11/06, G09B 11/10, B44D 2/00

(54) **MALSET MIT EINER KÜNSTLERPALETTE**

(71) Anmelder: Sora-Otterberg School of Realist Art Martina Pellegriti, 67697 Otterberg (DE)
(72) Erfinder: PELLEGRITI, Martina, 67697 Otterberg (DE)
(74) Vertreter: Patentanwälte Dr. Keller, Schwertfeger Partnerschaft mbB

(57) **Zusammenfassung**

Die vorliegende Erfindung betrifft ein Malset mit einer Künstlerpalette (12; 112; 312), die ein flächiges Basiselement (14; 314) umfasst, und mit einem Motiv (13; 113; 213), wobei das Basiselement (14; 314) in einen Farbmischbereich (26; 126; 236) und in einen Informationsbereich (28; 128; 228), in dem Informationen zu dem Motiv (13; 113; 213) enthalten sind, unterteilt ist, wobei das flächige Basiselement (14; 314) ein transparentes Arbeitselement (16; 116; 316) mit einer als Arbeitsfläche (22) ausgebildeten Außenseite aufweist sowie eine aus einem flächigen Material hergestellte Unterlage (20; 120a, 120b; 220; 320) mit einer Oberseite und einer Unterseite, wobei das Arbeitselement (16; 116; 316) auf der Oberseite der Unterlage (20; 120a, 120b; 220; 320) positioniert und lösbar oder fest mit der Unterlage (20; 120a, 120b; 220; 320) verbunden ist, und wobei die Unterlage (20; 120a, 120b; 220; 320) die Informationen zu dem Motiv (13; 113; 213), insbesondere Informationen zu den Farb- und/oder Tonwerten des Motivs (13; 113; 213) enthält sowie ein Verfahren zur Herstellung eines Malsets.

## Beschreibung

Die vorliegende Erfindung betrifft ein Malset mit einer Künstlerpalette und einem Motiv sowie ein Verfahren zur Herstellung des Malsets.

Ein Malset dient vor allem dazu, Hobbykünstlern den Zugang zur Malerei zu erleichtern. Eine bekannte Art eines Malsets basiert beispielsweise auf der Idee des Malens nach Zahlen, bei dem ein vorgegebenes Motiv in verschiedene Farbbereiche unterteilt ist und gleichen Farbbereichen die gleiche Nummer zugeordnet ist. Weiterhin umfasst diese Art eines Malsets eine Vielzahl von Malfarben, die ebenfalls mit einer Nummer versehen sind. Die Nummern der Farbbereiche korrespondieren mit den Nummern der bereitgestellten Malfarben, so dass auf einfache Weise die richtige Malfarbe in einem bestimmten Bereich des Motivs aufgetragen werden kann. Diese Art von Malsets richtet sich insbesondere an Hobbykünstler, die vor allem am Ausmalen von Vorlagen interessiert sind.

Es gibt jedoch eine Vielzahl von Hobbykünstlern, die andere Herausforderungen suchen. Sie möchten ein vorgegebenes Motiv abmalen und möglichst identisch auf einem Maluntergrund wiedergeben. Das Ziel dieser Hobbykünstler ist somit das möglichst identische, nicht verfremdete Abbilden eines Motivs, wobei es sich bei den Motiven um ein beliebiges Motiv, wie etwa ein natürliches Motiv, einen Originalgegenstand oder um eine realistische, abstrahierte oder abstrakte Abbildung handeln kann.

Insbesondere in der realistischen Malerei, in der unter anderem die farbgetreue Abbildung eines Gegenstandes oder einer Landschaft das Ziel ist, ist die Auswahl und das Mischen der gewünschten Malfarbe aus einer begrenzten Anzahl von vorgegebenen Malfarben eine große Herausforderung. Hierfür bedarf es viel Erfahrungen im Mischen und Farbsehen.

Doch das Farbsehen ist bei Hobbykünstlern in den meisten Fällen nicht oder nur vergleichsweise schlecht geschult. Es ist gerade für Anfänger sehr schwierig, eine im vorgegebenen Motiv vorkommende Farbe mit Hilfe von Malfarben so anzumischen, dass diese tatsächlich der Farbe des Motivs entspricht. Aufgrund der fehlenden Erfahrungen im Farbsehen und der Schwierigkeiten, Malfarben richtig zu mischen, wird bei Hobbykünstlern oft beobachtet, dass zumindest Teile des Motivs in einer falschen Farbe abgebildet werden und somit auch Volumen, 3-Dimensionalität und Farbperspektive nicht wiedergegeben werden können.

Das so entstandene Werk entspricht dann nicht den gesetzten Zielen des Hobbykünstlers einer möglichst identischen, nicht verfremdeten Abbildung eines Motivs.

Es besteht daher der Wunsch, Hilfsmittel oder Techniken bereitzustellen, mit Hilfe derer es möglich ist, eine in der Natur oder in einer Abbildung vorkommende Farbe möglichst exakt auf einem Maluntergrund wiederzugeben.

Insbesondere besteht der Wunsch, Hilfsmittel und Techniken bereitzustellen, mit Hilfe derer es möglich ist, die visuelle Wahrnehmung zu trainieren und somit zum korrekten Sehen zu gelangen.

Der Erfindung liegt die Erkenntnis zugrunde, dass der beste Abgleich zwischen einer vorgegebenen Farbe eines Motivs und einer Malfarbe dann erfolgt, wenn die Malfarbe in unmittelbarer Nähe zu der vorgegebenen Farbe des Motivs gebracht wird und somit unmittelbar nebeneinander liegend verglichen werden kann. Dies gilt nicht nur für die reinen herstellerseitig vorgegebenen Malfarben, sondern auch für die aus den herstellerseitig vorgegebenen Malfarben gemischten Malfarben.

Es ist daher Aufgabe der vorliegenden Erfindung, ein Malset bereitzustellen, mit Hilfe dessen es möglich ist, auf einfache Weise Farben eines Motivs mit Malfarben abzugleichen und darüber hinaus die visuelle Wahrnehmung zu trainieren.

Erfindungsgemäß wird die Aufgabe gelöst durch ein Malset nach Anspruch 1, insbesondere durch ein Malset mit einer Künstlerpalette, die ein flächiges Basiselement umfasst, und mit einem Motiv, wobei das Basiselement in einen Farbmischbereich und einen Informationsbereich, in dem Informationen zu dem Motiv enthalten sind, unterteilt ist, wobei das Basiselement ein transparentes flächiges Arbeitselement mit einer als Arbeitsfläche ausgebildeten Außenseite aufweist sowie eine aus einem flächigen Material hergestellte Unterlage mit einer Oberseite und einer Unterseite, wobei das Arbeitselement auf der Oberseite der Unterlage positioniert und lösbar oder fest mit der Unterlage verbunden ist, und wobei die Unterlage die Informationen, insbesondere Informationen zu den Farb- und/oder Tonwerten des Motivs enthält.

Künstlerpaletten werden in der Malerei vor allem dafür verwendet, um eine Auswahl an verschiedenen Malfarben für ein künstlerisches Werk bereitzustellen sowie um die auf der Künstlerpalette vorhandenen Malfarben gezielt zu mischen.

Üblicherweise bestehen diese Künstlerpaletten aus Holz, Porzellan oder Kunststoff. Je nach Art der Maltechnik verfügen die Künstlerpaletten über ein Daumenloch zum Halten der Künstlerpaletten in der Hand oder über Vertiefungen, um darin Malfarben zu mischen. Künstlerpaletten eigenen sich daher sowohl für viskose Malfarben wie Ölfarben oder Acrylfarben oder für flüssige Farben, wie etwa Aquarellfarben.

Wird ein Bild auf Grundlage eines vorgegebenen Motivs erstellt, so befindet sich das Motiv räumlich getrennt von der Künstlerpalette.

Da die Künstlerpalette des erfindungsgemäßen Malsets einen Farbmischbereich und einen Informationsbereich aufweist, in dem Informationen zu dem Motiv enthalten sind, entsteht eine sehr kompaktes Malset mit vergleichsweise wenig Platzbedarf.

Sind in den Informationen zu dem Motiv Informationen zu den Farb- und/oder Tonwerten des Motivs erhalten, besteht auf einfache Weise die Möglichkeit, Abweichungen zwischen der Malfarbe und der Farbe des Motivs zu korrigieren. Sollten beispielsweise nach einem Mischvorgang noch Abweichungen zwischen der gemischten Malfarbe und der Farbe des Motivs vorhanden sein, können diese Abweichungen direkt auf der Künstlerpalette korrigiert werden, indem beispielsweise ein etwas anderes Mischungsverhältnis der Malfarben gewählt wird.

Je geringer der räumliche Abstand zwischen der Malfarbe und den Informationen zu dem Motiv ist, desto einfacher ist der Abgleich zwischen der Malfarbe und den Informationen zu dem Motiv, insbesondere der Motivfarbe. Von daher ist es bevorzugt, dass der Farbmischbereich und der Informationsbereich benachbart liegen.

Es versteht sich, dass die Motivfarbe sowohl eine bunte Farbe als auch eine schwarze, weiße oder graue Farbe sein kann.

Die Verwendung eines transparenten flächigen Arbeitselements sorgt nicht nur für den Schutz der Unterlage, sondern ermöglicht es auch, die Malfarbe direkt im Informationsbereich aufzutragen und mit den Informationen zu dem Motiv, insbesondere mit der Motivfarbe zu vergleichen, ohne dass die Unterlage nachhaltig beschädigt oder beeinflusst wird.

Wenn die Außenseite des Arbeitselements gereinigt werden kann, so kann die Künstlerpalette mit Unterlage sogar wieder verwendet werden.

Bei einer bevorzugten Ausführungsform umfasst das Arbeitselement wenigstens eines der folgenden Bestandteile: Glasplatte, Kunstglasplatte, Kunststofffolie, Materialschicht in Form einer Beschichtung. Die Glasplatte oder die Kunstglasplatte sollte so gewählt sein, dass das Glas oder das Kunstglas keinen bzw. nur einen sehr geringen Farbstich aufweist, denn so hat die Glasplatte oder. die Kunstglasplatte keinen Einfluss auf die Farbwahrnehmung der auf der Unterlage befindlichen Informationen. Insbesondere handelt es sich bei der Glasplatte um eine Platte aus Klarglas und bei der Platte aus Kunstglas um eine Acrylglasplatte.

Anstelle einer Glasplatte oder Kunstglasplatte kann sich auf der Oberseite der Unterlage eine transparente Kunststofffolie befinden. Diese kann über die gesamte Arbeitsfläche fest mit der Unterlage verbunden sein, insbesondere verklebt sein oder lose auf ihr aufliegen. Schließlich kann die Unterlage auch mit einer transparenten Schicht, insbesondere mit einer transparenten Schutzschicht versehen sein. Die Kunststofffolie und die transparente Schutzschicht sollten ebenfalls keinen bzw. nur einen sehr geringen Farbstich aufweisen.

Es versteht sich, dass das Arbeitselement nicht nur eine transparente Materiallage, sondern auch mehrere gleiche oder verschiedene transparente Materiallagen aufweisen kann, die miteinander kombiniert werden können.

Nach Möglichkeit sollte die Außenseite des Arbeitselements glatt ausgebildet sein. Dies hat den Vorteil, dass das Arbeitselement einfach zu reinigen ist.

Da in der Malerei nicht nur weiche Pinsel eingesetzt werden, sondern auch Metallgegenstände wie Spachteln, ist es von Vorteil, dass die Außenseite des Arbeitselements kratzfest ist.

Bei einer bevorzugten Weiterbildung umfasst das Basiselement der Künstlerpalette ein unteres Plattenelement, wobei das transparente Arbeitselement, das untere Plattenelement und die Unterlage schichtartig angeordnet sind und sich die Unterlage zwischen dem unteren Plattenelement und dem Arbeitselement befindet. Hierdurch wird die Unterlage gegenüber äußeren Einflüssen geschützt und die Künstlerpalette erhält eine zusätzliche Stabilität.

Bei einer bevorzugten Weiterbildung ist das untere Plattenelement eine nicht biegsame Platte, vorzugsweise eine Platte aus einem Alu-Dibond. Alternativ kann die Platte jedoch auch aus Metall, Kunststoff, Holz oder Glas hergestellt sein. Die Verwendung eines unteren Plattenelements aus einem nicht biegsamen Material hat den Vorteil, dass die Künstlerpalette nicht nur horizontal, sondern auch vertikal verwendet werden kann. Die Verwendung von Alu-Dibond ermöglicht die Herstellung von leichten und sehr stabilen Künstlerpaletten.

Da die Unterlage die gleiche Größe wie das Arbeitselement aufweisen oder kleiner als das Arbeitselement sein kann, bietet das untere Plattenelement die Möglichkeit, die Unterlage unabhängig von der Größe der Unterlage sicher an dem Arbeitselement zu halten. Die Unterlage kann hierbei lose zwischen dem Arbeitselement und dem unteren Plattenelement liegen. Alternativ kann die Unterlage fest mit dem unteren Plattenelement verbunden sein.

Vorzugsweise weist das untere Plattenelement an seiner Unterseite wenigstens einen Abstandshalter auf. Somit lässt sich die Künstlerpalette einfach ablegen und wieder aufnehmen. Von besonderem Vorteil ist es hierbei, dass der wenigstens eine Abstandshalter rutschfest ist.

Bei einer bevorzugten Ausführungsform weist die Künstlerpalette eine Abdeckung auf, die zumindest abschnittsweise die Außenseite des Arbeitselements bedeckt. Die Abdeckung kann beispielsweise als ein einen Hohlraum bildenden Deckel ausgebildet sein, der die Außenseite des Arbeitselements teilweise oder vollständig bedeckt. Alternativ kann die Abdeckung eine Platte sein, die mit einer umlaufenden Dichtungslippe versehen ist, so dass ein Hohlraum entsteht. Der Hohlraum kann dazu dienen, Malfarben, die sich auf der Außenseite des Arbeitselements befinden, zu bedecken. Dies ermöglicht dem Nutzer, den Malvorgang zu unterbrechen, ohne dass die auf dem Arbeitselement befindliche Farbe bis zur Wiederaufnahme des Malvorgangs eintrocknet.

Die Abdeckung kann lose oder gelenkig mit dem Basiselement verbunden sein. Darüber hinaus kann eine Arretierung für die Abdeckung vorgesehen sein, so dass die Abdeckung beispielsweise in einem vorbestimmten Winkel zum Basiselement gehalten werden kann. Dies führt dazu, dass auf der Unterseite der Abdeckung Informationen zu dem Motiv oder das Motiv selbst dargestellt werden können und während des Malvorgangs zur Verfügung stehen.

In vorteilhafter Weise liegt das Arbeitselement lösbar auf der Oberseite der Unterlage und es ist ein Befestigungsmittel vorgesehen, welches das Arbeitselement lösbar mit der Unterlage verbindet. Hierdurch besteht einerseits die Möglichkeit, die Unterlage rutschfest bzw. verschiebesicher gegenüber dem Arbeitselement zu befestigen. Andererseits bietet dies die Möglichkeit, die Unterlage und somit das Motiv auszutauschen, so dass das Arbeitselement nach einer Reinigung weiterverwendet werden kann.

Vorzugsweise ist das Befestigungsmittel am Rand des Arbeitselements vorgesehen, so dass das Arbeitselement einen möglichst großen Arbeitsbereich aufweist.

Es ist von Vorteil, dass das Befestigungselement wenigstens ein Klemmelement aufweist. Das Klemmelement hat den Vorteil, dass es einfach gelöst werden kann, so dass ein Austausch der Unterlage möglich ist. Anstelle des Klemmelements kann auch ein Steckelement vorgesehen sein.

Alternativ kann das Befestigungselement wenigstens ein Gelenk, insbesondere ein Scharnier aufweisen. Beispielsweise können das Arbeitselement und das untere Plattenelement mittels eines Scharniers verbunden sein, so dass das Arbeitselement aufgeklappt werden kann, um eine Unterlage zwischen das untere Plattenelement und das Arbeitselement zu legen oder daraus zu entfernen. Zusätzlich kann hier ein Klemmelement oder Steckelement vorgesehen sein, um das Arbeitselement, die Unterlage und das untere Plattenelement fest miteinander zu verbinden.

Um Verletzungen zu vermeiden und/oder um die Künstlerpalette zu schützen ist es von Vorteil, dass ein Eckenschutz vorgesehen ist. Bevorzugt ist der Eckenschutz als Klemm- oder Steckelement ausgebildet, so dass die Arbeitsfläche der Künstlerpalette möglichst groß ist.

Es hat sich als Vorteil erwiesen, dass die Unterlage eine bedruckte Papier- bzw. Folienlage ist, die entweder nur einen Informationsbereich oder sowohl einen Farbmischbereich als auch einen Informationsbereich aufweist.

Die Unterlage kann kleiner als das Arbeitselement ausgebildet sein, so dass in dem Fall, im dem ein unteres Plattenelement vorgesehen ist, die Farbe des unteren Plattenelements als Untergrundfarbe für den Farbmischbereich verwendet wird.

Insbesondere dann, wenn kein unteres Plattenelement verwendet wird oder die Farbe des unteren Plattenelements ungeeignet ist, ist es von Vorteil, dass die Unterlage sowohl einen Farbmischbereich als auch einen Informationsbereich aufweist. Die Farbe des Farbmischbereichs kann in einer neutralen Farbe, beispielsweise grau, gehalten werden, so dass das Mischergebnis nicht von der Farbe des Untergrunds abhängt.

Bei einer alternativen Ausführungsform kann zusätzlich zur Unterlage eine Zwischenlage vorgesehen sein, wobei die Unterlage im Informationsbereich und die Zwischenlage im Farbmischbereich vorgesehen sind.

Bei einer bevorzugten Ausführungsform enthält der Informationsbereich wenigstens eine der folgenden Informationen: das Malmotiv selbst, Informationen zu Ton- und/oder Farbwerten des Malmotivs, Informationen zum Mischungsverhältnis einzelner Farben des Malmotivs, Kontur des Motivs, Bildaufbau.

Inhalt der vorliegenden Erfindung ist auch ein Verfahren zur Herstellung eines Malsets mit einem transparenten Arbeitselement, einem Motiv und einer Unterlage, insbesondere ein Verfahren zur Herstellung eines Malsets nach einem der vorhergehenden Ansprüche.

Insbesondere umfasst das Verfahren zur Herstellung eines Malsets mit einem oberen transparenten Plattenelement, einem Motiv und einer Unterlage folgende Schritte: Zunächst wird ein transparentes Arbeitselement bereitgestellt sowie ein Motiv. Vorher oder nachher wird die Unterlage hergestellt, wobei die Herstellung der Unterlage folgende Schritte umfasst: Zunächst wird ein bedruckbarer, flächiger Materialabschnitt bereitgestellt. Weiterhin wird das Motiv bearbeitet, indem eine begrenzte Anzahl von charakteristischen Ton- und/oder Farbwerten des Motivs ausgewählt wird. Danach werden die ausgewählten charakteristischen Ton- und/oder Farbwerte des Motivs auf dem Motiv markiert. Im nächsten Schritt wird eine Farb- und/oder Tonwertskala für die ausgewählten Ton- und /oder Farbwerte bereitgestellt. Schließlich werden das Motiv mit den markierten Ton- und/oder Farbwerten sowie die Farb- und/oder Tonwertskala auf dem Materialabschnitt abgebildet. Nun steht eine Unterlage zur Verfügung, die Informationen zu dem Motiv wie etwa Informationen zu den entsprechenden Ton- und Farbwerten des Motivs aufweist. Anschließend werden die Unterlage und das Arbeitselement verbunden. Hierdurch kann eine Künstlerpalette gebildet werden.

Es versteht sich, dass der mit den Informationen versehene Materialabschnitt entsprechend konfektioniert, insbesondere auf eine gewünschte Größe zugeschnitten werden kann.

Zusätzlich kann das Motiv in abstrahierte Formen zerlegt werden und das Motiv mit den abstrahierten Formen in dem Materialabschnitt abgebildet werden. Dies ermöglicht einem Malschüler nicht nur die Farben richtig zu erkennen, sondern auch die Proportionen und die Grundstruktur des Motivs zu erkennen.

Zusätzlich oder alternativ hierzu können Informationen zum Bildaufbau des Motivs bereitgestellt werden und diese Informationen in eine bereits vorhandene Abbildung des Motivs oder in eine zusätzliche Abbildung des Motivs in dem Materialabschnitt abgebildet werden. Dies hilft einem Kunstschüler bei regelmäßigen Arbeiten mit unterschiedlichen Formen, den Bildaufbau von Bildern zu erkennen.

Es versteht sich, dass auch noch weitere Informationen zu dem Motiv bereitgestellt werden können, wie beispielsweise Informationen zum Schattenwurf, einen Farbkreis oder Mischverhältnisse.

Bevorzugte Ausführungsformen werden anhand der beigefügten Zeichnungen näher erläutert, in denen zeigen:
- Fig. 1: ein sich in Gebrauch befindliches Malset gemäß einer ersten Ausführungsform,
- Fig. 2: eine Künstlerpalette in einer Draufsicht,
- Fig. 3: eine Künstlerpalette in einer Seitenansicht,
- Fig. 4: ein Malset in zerlegter Darstellung,
- Fig. 5: eine Unterlage,
- Fig. 6: ein in Gebrauch befindliches Malset gemäß einer zweiter Ausführungsform,
- Fig. 7: ein Anwendungsbeispiel für die Benutzung des Malsets gemäß einer dritten Ausführungsform,
- Fig. 8: eine weitere Ausführungsform eines Malsets in Draufsicht in geschlossener Stellung,
- Fig. 9: das in Fig. 8 dargestellte Malset in Seitenansicht in geschlossener Stellung,
- Fig. 10: das in Fig. 8 und 9 dargestellte Malset in offener Stellung.

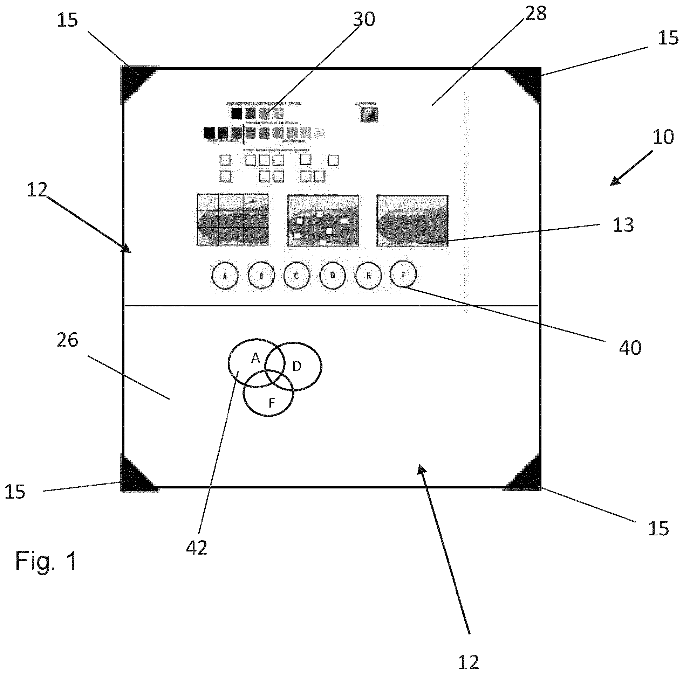

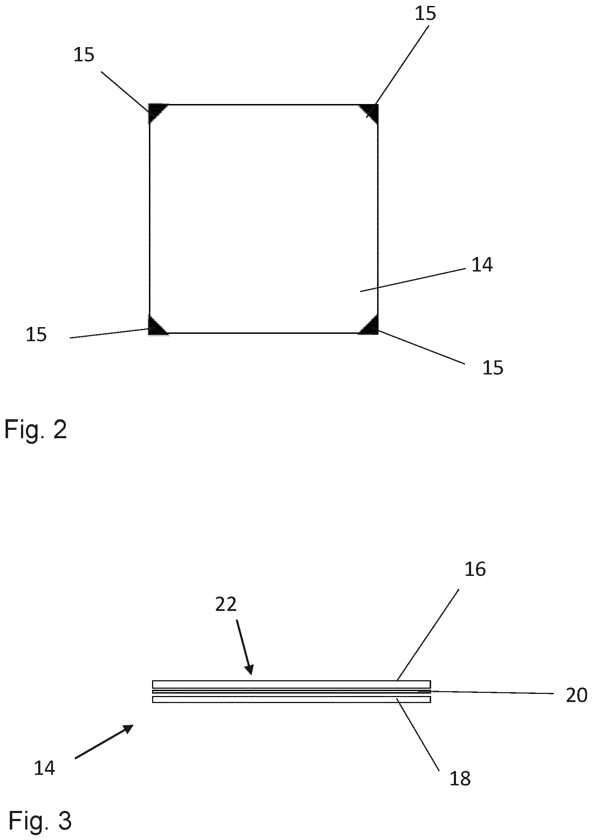

Fig. 1 zeigt ein sich in Gebrauch befindliches Malset 10 gemäß einer ersten Ausführungsform. Das Malset 10 umfasst ein Künstlerpalette 12 und ein Motiv 13. Wie insbesondere in Fig. 2 dargestellt ist, umfasst die Künstlerpalette 12 ein Basiselement 14 und Befestigungsmittel 15.

Das Basiselement 14 wiederum umfasst, wie in Fig. 3 zu erkennen ist, ein transparentes Arbeitselement 16, eine Unterlage 20 und eine unteres Plattenelement 18, wobei das Arbeitselement 16, die Unterlage 20 und das untere Plattenelement 18 schichtartig angeordnet sind.

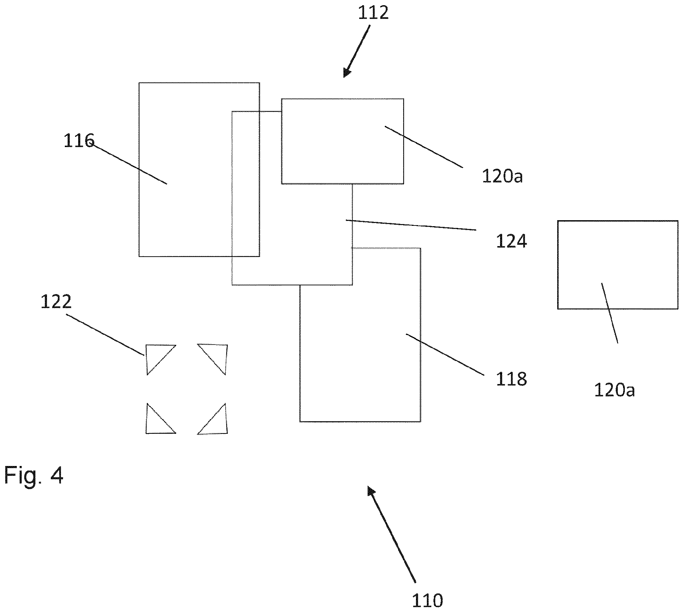

Das Arbeitselement 16 und das untere Plattenelement 18 sind gleich groß. Die Größe des Arbeitselements 16 und des unteren Plattenelements 18 kann an die Bedürfnisse des Nutzers angepasst sein. Bevorzugt betragen die Seitenlänge des Arbeitselements 16 und des unteren Plattenelements 18 mehr als 10 cm und sollten nicht größer als 100 cm sein. Das Arbeitselement 16 und das untere Plattenelement 18 sind rechteckig mit unterschiedlichen Seitenlängen ausgebildet, wobei das Arbeitselement 16 und das untere Plattenelement wie in Fig. 4 dargestellt auch quadratisch ausgebildet sein können oder jede andere Form annehmen können.

Die Unterlage 20 weist eine Oberseite und einer Unterseite auf und befindet sich zwischen dem Arbeitselement 16 und dem unteren Plattenelement 18, wobei die Unterlage 20 die gleiche Größe aufweist wie das Arbeitselement 16 und das untere Plattenelement 18. Das Arbeitselement 16 liegt hierbei auf der Oberseite der Unterlage 20 auf. Das Arbeitselement 16 verfügt an seiner Außenseite über eine Arbeitsfläche 22. Das Basiselement 14 ist in einen Farbmischbereich 26 und einen Informationsbereich 28, in dem Informationen zu dem Motiv 13 enthalten sind, unterteilt. Die Informationen zu dem Motiv 13 sind auf der Unterlage 20 aufgedruckt.

Das Arbeitselement 16 ist transparent und aus einem Klarglas oder Kunstglas wie etwa Acrylglas hergestellt. Es weist eine sehr gute Transparenz ohne störenden Farbstich auf. Die Außenseite des Arbeitselements 16 und somit die Arbeitsfläche des Arbeitselements 16 sind glatt und kratzfest, so dass das Arbeitselement 16 für die Verwendung von Pinsel und Spachtel geeignet ist. Nach Gebrauch kann sie gereinigt werden.

Das untere Plattenelement 18 besteht aus einem stabilen nicht biegbaren Material, wie etwa Glas, Acryl, Holz o.ä sowie entsprechenden Kombinationen davon. Bevorzugt ist jedoch eine dünne Metallplatte oder Alu-Dibond. Vorzugsweise ist das Material des unteren Plattenelements 18 sehr dünn und leicht.

In Fig. 3 ist eine alternative Ausführungsform eines Malsets 110 mit einer Künstlerpalette 112 in zerlegter Darstellung gezeigt. Während die in Fig. 1 dargestellte Künstlerpalette 12 eine quadratische plattenförmige Grundstruktur aufweist, weist die in Fig. 2 gezeigte Künstlerpalette 112 eine rechteckige plattenförmige Grundstruktur auf.

Wie in Fig. 4 zu erkennen ist, umfasst die Künstlerpalette 112 ein Arbeitselement 116, ein unteres Plattenelement 118 und eine erste Unterlage 120a, eine zweite Unterlage 120b sowie Befestigungsmittel in Form von Klemmelementen 122. Zusätzlich ist noch eine Zwischenlage 124 vorgesehen. Das Arbeitselement 116, eine Unterlage, entweder die erste Unterlage 120a oder die zweite Unterlage 120b, die Zwischenlage 124 und das untere Plattenelement 118 bilden das Basiselement, wobei entweder die erste Unterlage 120a oder die zweite Unterlage 120b auf der Zwischenlage 124 liegt. Wenn auch nicht dargestellt, so ist das Basiselement in einen Farbmischbereich und einen Informationsbereich unterteilt.

Die erste Unterlage 120a und die zweite Unterlage 120b enthalten Informationen zu einem in Fig.4 nicht dargestellten Motiv und sind kleiner als das Arbeitselement 116 und das untere Plattenelement 118. Insbesondere entspricht die Größe der erste Unterlage 120a sowie die Größe der zweiten Unterlage 120b der Größe des halben Arbeitselements 116 bzw. des halben unteren Plattenelements 118.

Die Zwischenlage 124 hingegen weist die gleiche Größe auf wie das Arbeitselement 116 und das untere Plattenelement 118.

Entweder die erste Unterlage 120a oder die zweite Unterlage 120b befinden sich im Informationsbereich, da die erste Unterlage 120a und die zweite Unterlage 120b Informationen zu dem Motiv enthalten. Die Zwischenlage 124 bildet den Hintergrund des Farbmischbereichs 126.

Bei der Zwischenlage 124 handelt es sich um einen einfarbigen Papier- , Karton- oder Folienbogen, vorzugsweise in einer grauen Farbe.

Die erste Unterlage 120a und die zweite Unterlage 120b bestehen jeweils aus einem bedruckbaren Material, insbesondere aus einem Papier-, Karton- oder Folienbogen.

Die Klemmelemente 122 sorgen dafür, dass die übereinander liegenden Teile des Basiselements in Position gehalten werden. Bei den Klemmelementen 122 handelt es sich um vier hohle Eckstücke, die lösbar an den vier Ecken des Basiselements befestigbar sind.

Die Eckstücke sind aus Kunststoff oder anderen Materialien wie Metall oder Holz hergestellt. Der Hohlraum der Eckstücke ist komplementär zur den Ecken des Basiselements gestaltet, so dass die Eckstücke auf die Ecken des Basiselements gesteckt und anschließend wieder abgenommen werden können. Die Eckstücke dienen somit nicht nur zur Fixierung der einzelnen Bestandteile des Basiselements, sondern auch als Abstandshalter, als Eckenschutz und als Rutschsicherung. Die Funktion als Abstandshalter hat den Vorteil, dass eine auf eine glatte Ablagefläche abgelegte Künstlerpalette 112 einfach wieder von einer glatten Ablagefläche aufgenommen werden kann.

Da die Eckstücke lösbar an dem Basiselement befestigt sind und die Vorlage 120a lose zwischen dem unteren Plattenelement 118 und der Arbeitsplatte116 liegt, sind die Vorlagen 120a und 120b austauschbar.

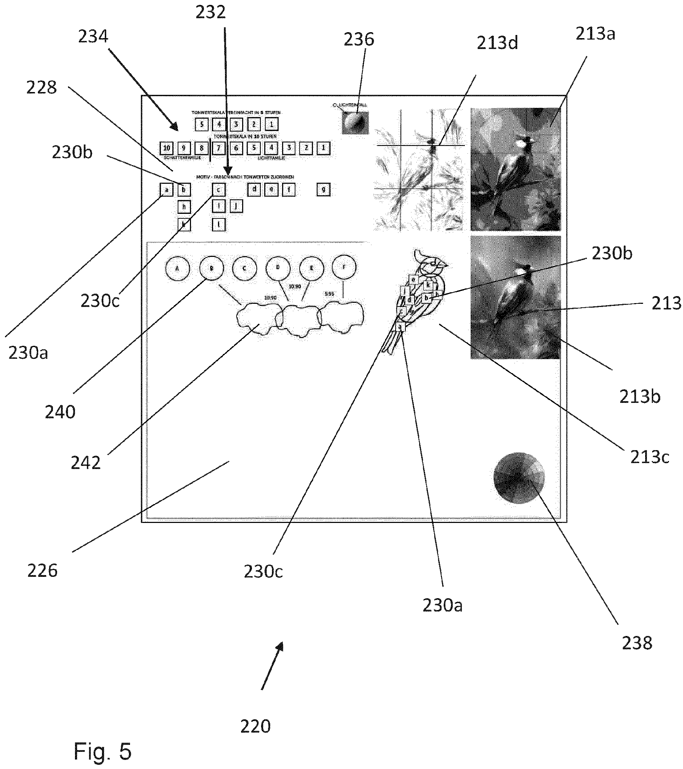

Fig. 5 zeigt eine alternative Ausführungsform einer Unterlage 220, die für die Verwendung des in Fig. 1 dargestellten Malsets 10 geeignet ist. Die Unterlage 220 ist quadratisch ausgebildet. Bei dieser Ausführungsform weist die Unterlage 220 die gleiche Größe wie das Arbeitselement 16 und das untere Plattenelement 18 auf. Die Unterlage 220 ist unterteilt in einen Farbmischbereich 226 sowie in einen Informationsbereich 228, wobei sich der Informationsbereich 228 im Wesentlichen am oberen Rand der Unterlage 220 befindet.

Der Farbmischbereich 226 ist in einer neutralen Farbe, wie etwa grauen Farbe gehalten.

Im Informationsbereich befinden sich das Motiv 213 sowie verschiedene Darstellungen des Motivs und Informationen zu dem Motiv 213. Im Detail enthält der Informationsbereich 228 eine Abbildung des Motivs in Schwarzweiß 213a und eine Abbildung des zu malenden Motivs in Farbe 213b. In einer weiteren Motivdarstellung 213c sind die Formen des Motivs abstrahiert, so dass die Grundstruktur des Motivs zu erkennen ist. Schließlich ist eine Abbildung des Motivs 213d vorgesehen, bei der es sich um eine Vorzeichnung des Motivs handelt.

In der Abbildung des Motivs 213c, in der die Formen des Motivs abstrahiert sind, sind einzelne Bereich mittels entsprechender Farbfelder herausgehoben. Jedes Farbfeld zeigt den Farbwert 230a, 230b, 230c des Motivs an der mit Hilfe der Farbfelder markierten Stelle des Motivs. Vorzugsweise ist die Abbildung 213c in Farbe.

Die in dem Motiv 213c in entsprechenden Farbfeldern markierten Farbwerte 230a, 230b, 230c sind wiederum in Farbfeldern einer Farbskala 232 separat abgebildet. Die Buchstaben a, b, c, d, e, f, g, h, i, j, k, l, in den Feldern der Farbwerte 230a, 230b, 230c der Fig. 5 stehen stellvertretend für eine Abbildung der tatsächlichen Farbe, beispielsweise stellvertretend für ein rotes oder grünes Farbfeld. Die ausgewählten Farbwerte 230a, 230b, 230c des Motivs 213 sind in der Farbskala 232 nach Farb- und Tonwerten sortiert. Somit ist eine Zuordnung der in der Farbskala abgebildeten Farbwerte 230a, 230b, 230c zu einzelnen Stellen des Motivs 213 möglich.

Um den Einfluss des Lichts auf die Farben anzugeben, ist eine Tonwertskala 234 in Graustufen angegeben. Die Zahlen 1 bis 10 in der Tonwertskala 234 stehen stellvertretend für verschiedene dargestellte Grautöne.

Zusätzlich befinden sich im Informationsbereich 228 eine Kugel 236, die Informationen über den Lichteinfall sowie den Schattenwurf darstellt, sowie ein Farbkreis 238.

Im Farbmischbereich 226 sind Vorschläge zu den zu verwendenden Malfarben 240 enthalten sowie entsprechende Mischverhältnisse. Die Buchstaben A,B, C, D, E, F in Fig. 5 stehen für Malfarben unterschiedlicher Farbe.

Zur Herstellung der Unterlage 220 wird zunächst eine Vorzeichnung sowie das zu malende Motiv 213 in Schwarzweiß bereitgestellt und entsprechend manuell oder digital bearbeitet, indem die Kontur des Motivs, sowie vordefinierte Formen innerhalb des Motivs herausgearbeitet und entsprechend markiert werden. Hierbei entstehen die Informationen zu dem Motiv gemäß den Abbildungen 213a, 213c und 213d.

Nun wird das Motiv in Farbe bereitgestellt. Charakteristische Farben 230a, 230b, 230c des Motivs werden in dem bunten Motiv gemäß Abbildung 213b identifiziert und entsprechend mittels Farbfelder in der Abbildung 213c hervorgehoben. Die Bearbeitung erfolgt möglichst digital. Die Farbfelder können alternativ in dem bunten Motiv gemäß Abbildung 213b enthalten sein.

Die identifizierten und markierten charakteristischen Farbwerte 230a, 230b, 230c des Motivs 213 werden in Form einer Farbwertskala 232 dargestellt und in die Tonwertskala 234 aufgenommen.

Das aufbereitete Motiv 213a in Schwarzweiß, das aufbereitete bunte Motiv 213b und die charakteristischen Farbwerte 230a, 230b, 230c werden zusammen mit der Farbwertskala 232 und der Tonwertskala 234 auf den Informationsbereich 228 des bedruckbaren Materialbogens übertragen.

Zusätzlich wird der Farbkreis 238 sowie die Schattenkugel 236 aufgenommen und auf die Unterlage 220 gedruckt.

Bei nicht dargestellten Ausführungsformen können mehr oder weniger Informationen im Informationsbereich enthalten sein. Allen Ausführungsformen ist jedoch gemeinsam, dass das Motiv entweder in Farbe oder Schwarzweiß abgedruckt ist und in dem Motiv charakteristische Farben und/oder Tonwerte identifiziert, markiert und hervorgehoben sind, wobei die identifizierten, markierten und hervorgehobenen charakteristischen Farbwerte und/oder Tonwerte in einer separaten Farbskala bzw. Tonwertskale enthalten sind.

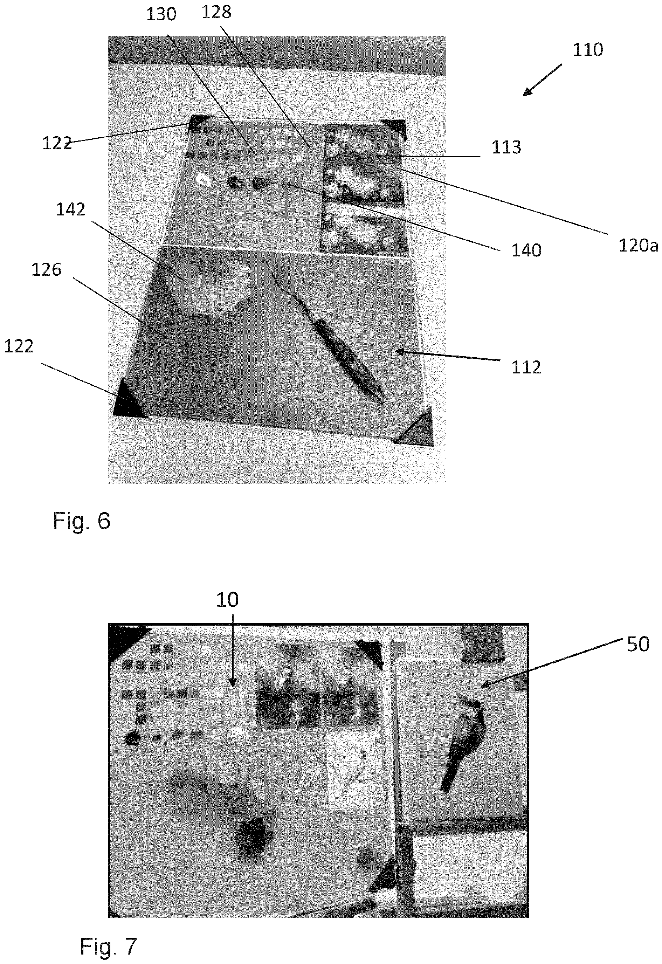

Die Figur 6 zeigt die Verwendung des in Fig. 4 dargestellten Malsets. In Fig. 7 ist die Verwendung eines weiteren Malsets gezeigt.

Zur Verwendung der dargestellten Malsets wird eine Unterlage 20; 120a, 120b; 220 mit Informationen zu einem Motiv 13; 113; 213 zwischen das entsprechende untere Plattenelement 18, 118 und das Arbeitselement 16, 116 gelegt und anschließend mit den Klemmelementen 122 an den Ecken des Basiselements 14 befestigt.

Zunächst überträgt der Künstler bzw. Kunstschüler die Grundform des Motivs gemäß den Informationen im Informationsbereich 28; 128; 228 auf eine Leinwand 50 oder einen anderen Malgrund. Im nächsten Schritt trägt der Künstler bzw. Kunstschüler ausgewählte Malfarben 40; 140; 240 auf den Farbmischbereich 26; 126; 226 oder in dem nicht bedruckten Bereich des Informationsbereichs 28; 128; 228 auf. Danach werden die Malfarben 40; 140; 240 entsprechend dem Farbkreis im Farbmischbereich 26; 126; 226 gemischt, so dass ein oder mehrere Mischfarben 42; 142; 242 entstehen. Das Mischungsverhältnis wird solange geändert, bis die Mischfarbe 42; 142; 242 im direkten Vergleich dem im Informationsbereich 28; 128; 228 abgedruckten charakteristischen Farbwert 30; 130; 230a, 230b, 230c entspricht. Die mit dem charakteristischen Farbwert 30; 130; 230a, 230b, 230c abgeglichene Mischfarbe 42; 142; 242 kann dann entsprechend der korrespondierenden Angabe des Farbwerts 30; 130; 230a, 230b, 230c auf dem Motiv 13; 113; 213 an der richtigen Stelle des auf einer Leinwand oder einem anderen Malgrund vorgezeichneten Motivs 13; 113; 213 auf die Leinwand 50 oder den entsprechenden Malgrund übertragen werden, so dass das Motiv 13; 113; 213 entsprechend nachgemalt werden kann (siehe Fig. 7).

Ein regelmäßiges Arbeiten mit dem Malset schult viele Wahrnehmungsbereiche u.a. das Farbsehen und die Figurgrundwahrnehmung.

Bei Mischfehlern oder nach Gebrauch kann die Oberseite des Arbeitselements 16; 116 gereinigt werden, so dass die Künstlerpalette 12; 112 für einen erneuten Gebrauch wieder zur Verfügung steht.

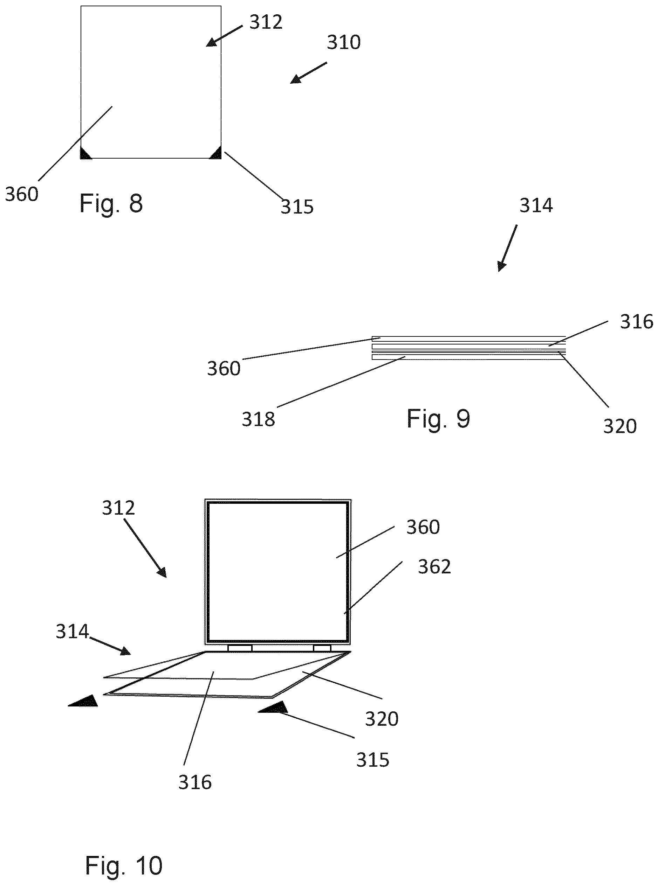

In den Fig. 8 bis 10 ist eine weitere Ausführungsform eines Malsets 310 mit einer Künstlerpalette 312 gezeigt, wobei das Motiv nicht dargestellt ist. Bei der Künstlerpalette 312 dieser Ausführungsform ist zusätzlich zu dem Basiselement 314 eine Abdeckung 360 vorgesehen.

In Fig. 8 ist eine Draufsicht auf die Künstlerpalette 312 im geschlossenen Zustand gezeigt. In Fig. 9 ist die Künstlerpalette 312 in einer Seitensicht im geschlossenen Zustand zu erkennen. Fig. 10 zeigt die Künstlerpalette 312 in geöffnetem Zustand.

Die Künstlerpalette 312 verfügt über ein Basiselement 314 mit einem unteren Plattenelement 318, einer Unterlage 320 mit einem nicht dargestellten Motiv sowie Informationen zu dem Motiv und einem Arbeitselement 316 sowie Befestigungsmitteln 315. Weiterhin ist eine Abdeckung in Form eines Deckels 360 vorgesehen, der das Arbeitselement 316 vollständig bedeckt. Der Deckel 360 ist als Platte mit einer Dichtungslippe 362 ausgebildet und bildet zusammen mit dem Arbeitselement 316 im geschlossenen Zustand einen Hohlraum.

Der Deckel 360 ist gelenkig mit dem Basiselement 314 verbunden. Wenn auch nicht dargestellt, so kann eine Arretierung vorgesehen sein, um den Deckel 360 im geöffneten Zustand in einem vorgegebenen Winkel kleiner 180° zu halten.

Auf der Innenseite des Deckels 360 befindet sich eine zusätzliche Abbildung des Motivs, entweder kann das Motiv auf den Deckel 360 aufgedruckt sein oder es kann eine Halterung für eine Materiallage mit einer Abbildung des Motivs vorgesehen sein.

Die Befestigungsmittel 315 sind lösbar an dem Basiselement 314 befestigt und so ausgelegt, dass das Basiselement 314 und der Deckel 360 im geschlossenen Zustand fest miteinander verbunden sind.

Ein Deckel kann bei all den dargestellten Ausführungsformen zusätzlich vorgesehen sein. Er dient vor allem dazu, Malfarben 40; 140; 240, die auf das Basiselement 314 aufgetragen wurden, vor dem Austrocknen zu schützen, wenn die Arbeit mit dem Malset unterbrochen wird.

Wenn die dargestellte Künstlerpalette 12; 112, 312 auch rechteckig mit unterschiedlichen Seitenlängen oder quadratisch ausgebildet ist, so ist im Rahmen der vorliegenden Erfindung auch vorgesehen, dass die Künstlerpalette eine andere Form aufweist. Sie kann auch mehreckig und/oder rund ausgebildet sein.

Wenn auch nicht darstellt, so kann die Unterlage direkt mit dem transparenten Arbeitselement verbunden sein. Hier handelt es sich dann um eine Palette, mit der zwar mehrmals ein Motiv nachgemalt werden kann, bei der jedoch kein Motivwechsel möglich ist.

Anstelle der Klemmelemente an den Ecken können andere Befestigungselemente vorgesehen sein, insbesondere Klemmelemente, die beispielsweise entlang der Seitenkante der Künstlerpalette vorgesehen sind.

Anstelle der Klemmelemente können auch Gelenke oder Scharniere vorgesehen sein, so dass das obere Plattenelement und das untere Plattenelement auseinandergeklappt werden können um eine Malvorlage dazwischen einzulegen.

Bei nicht darstellten Malvorlagen können mehr oder weniger Informationen zu dem Motiv enthalten sein. Zusätzlich können beispielsweise noch Informationen zum Bildaufbau angegeben sein.

Im Rahmen der Erfindung kann anstelle einer transparenten Glas- oder Kunstglasplatte als Arbeitselement auch eine transparente Kunststofffolie und/oder eine transparente Beschichtung auf der Unterlage vorgesehen sein.

Von der Erfindung sind auch nicht dargestellte Ausführungsformen umfasst, bei denen einzelne Merkmale der dargestellten Ausführungsformen weggelassen oder in unterschiedlicher Weise miteinander kombiniert wurden.

## Patentansprüche

1. Malset mit einer Künstlerpalette (12; 112; 312), die ein flächiges Basiselement (14; 314) umfasst, und mit einem Motiv (13; 113; 213),
wobei das Basiselement (14; 314) in einen Farbmischbereich (26; 126; 236) und in einen Informationsbereich (28; 128; 228), in dem Informationen zu dem Motiv (13; 113; 213) enthalten sind, unterteilt ist,
wobei das flächige Basiselement (14; 314) ein transparentes flächiges Arbeitselement (16; 116; 316) mit einer als Arbeitsfläche (22) ausgebildeten Außenseite aufweist sowie eine aus einem flächigen Material hergestellte Unterlage (20; 120a, 120b; 220; 320) mit einer Oberseite und einer Unterseite,
wobei das Arbeitselement (16; 116; 316) auf der Oberseite der Unterlage (20; 120a, 120b; 220; 320) positioniert und lösbar oder fest mit der Unterlage (20; 120a, 120b; 220; 320) verbunden ist, und
wobei die Unterlage (20; 120a, 120b; 220; 320) die Informationen zu dem Motiv (13; 113; 213), insbesondere Informationen zu den Farb- und/oder Tonwerten des Motivs (13; 113; 213) enthält.

2. Malset nach Anspruch 1, **dadurch gekennzeichnet, dass** das Arbeitselement (16; 116; 316) wenigstens eines der folgenden Bestandteile umfasst: Glasplatte, Kunstglasplatte, Kunststofffolie, Materialschicht in Form einer Beschichtung.

3. Malset nach einem der vorhergehenden Ansprüche, **dadurch gekennzeichnet, dass** die Außenseite des Arbeitselements (16; 116; 316) glatt und/oder kratzfest ist.

4. Malset nach einem der vorhergehenden Ansprüche, **dadurch gekennzeichnet, dass** das Basiselement (14; 314) der Künstlerpalette (12; 112; 312) ein unteres Plattenelement (18; 118; 318) umfasst, wobei das Arbeitselement (16; 116; 316), das untere Plattenelement (18; 118; 318) und die Unterlage (20; 120a, 120b; 220; 320) schichtartig angeordnet sind und sich die Unterlage (20; 120a, 120b; 220; 320) zwischen dem unteren Plattenelement (18; 118; 318) und dem Arbeitselement (16; 116; 316) befindet.

5. Malset nach Anspruch 4, **dadurch gekennzeichnet, dass** das untere Plattenelement (18; 118; 318) eine nicht biegsame Platte, vorzugsweise eine Platte aus einem Alu-Dibond oder aus Holz ist.

6. Malset nach einem der Ansprüche 4 oder 5, **dadurch gekennzeichnet, dass** das untere Plattenelement (18; 118; 318) an seiner Unterseite wenigstens einen Abstandshalter aufweist.

7. Malset nach einem der vorhergehenden Ansprüche, **dadurch gekennzeichnet, dass** die Künstlerpalette (312) eine Abdeckung (360) aufweist, die zumindest abschnittsweise die Außenseite des Arbeitselements (316) bedeckt.

8. Malset nach einem der vorhergehenden Ansprüche, **dadurch gekennzeichnet, dass** das Arbeitselement (16; 116; 316) lösbar auf der Oberseite der Unterlage (20; 120a, 120b; 220; 320) liegt und dass ein Befestigungsmittel (15; 315) vorgesehen ist, welches das Arbeitselement (16; 116; 316) lösbar mit der Unterlage (20; 120a, 120b; 220; 320) verbindet, wobei das Befestigungsmittel (15; 315) vorzugsweise am Rand des Arbeitselements (16; 116; 316) vorgesehen ist.

9. Malset nach Anspruch 8, **dadurch gekennzeichnet, dass** das Befestigungsmittel (15; 315) wenigstens ein Befestigungselement umfasst, das zumindest mit dem Arbeitselement (16; 116; 316) oder dem unteren Plattenelement (18; 118; 318) lösbar verbunden ist.

10. Malset nach einem der Ansprüche 8 oder 9, **dadurch gekennzeichnet, dass** das Befestigungselement wenigstens ein Klemm- oder Steckelement (122) und/oder wenigstens ein Gelenk, insbesondere ein Scharnier aufweist.

11. Malset nach einem der vorhergehenden Ansprüche, **dadurch gekennzeichnet, dass** ein Eckenschutz vorgesehen ist, wobei der Eckenschutz vorzugsweise als Klemm- oder Steckelement (122) ausgebildet ist.

12. Malset nach einem der vorhergehenden Ansprüche, **dadurch gekennzeichnet, dass** die Unterlage (20; 120a, 120b; 220; 320) eine bedruckte Papier- oder Folienlage ist, die nur einen Informationsbereich (28; 128; 228) oder sowohl einen Farbmischbereich (26; 126; 226) als auch einen Informationsbereich (28; 128; 228) aufweist.

13. Malset nach einem der vorhergehenden Ansprüche, **dadurch gekennzeichnet, dass** der Informationsbereich (28; 128; 228) wenigstens eine der folgenden Informationen enthält: das Motiv (13; 113; 213) selbst, Informationen zu Tonwerten (234) und/oder Farbwerten (30; 130; 230a, 230b, 230c) des Motivs (13; 113; 213), Informationen zum Mischungsverhältnis einzelner Farben des Motivs (13; 113; 213), Kontur des Motivs (13; 113; 213), Komposition/ Bildaufbau, vereinfachte Formen des Motivs (13; 113; 213).

14. Verfahren zur Herstellung eines Malsets (10) mit einem transparenten Arbeitselement (16; 116; 316), einem Motiv (13; 113; 213) und einer Unterlage (20; 120a, 120b; 220; 320), insbesondere Verfahren zur Herstellung eines Malsets (10) nach einem der Ansprüche 1 bis 13, **gekennzeichnet durch** folgende Schritte,
▪ Bereitstellen eines Motivs (13; 113; 213) und
▪ Herstellen einer Unterlage (20; 120a, 120b; 220; 320), wobei die Herstellung der Unterlage (20; 120a, 120b; 220; 320) folgende Schritte umfasst:
∘ Bereitstellung eines bedruckbaren, flächigen Materialabschnitts,
∘ Auswahl einer begrenzten Anzahl von charakteristischen Tonwerten und/oder Farbwerten (30; 130; 230a, 230b, 230c) des Motivs,
∘ Identifizieren und Markieren der ausgewählten Ton- und/oder Farbwerte (30; 130; 230a, 230b, 230c) des Motivs (13; 113; 213) auf dem Motiv (13; 113; 213),
∘ Bereitstellung einer Farb- und/oder Tonwertskala (132, 134; 232; 234) für die ausgewählten charakteristischen Ton- und /oder Farbwerte (30; 130; 230a, 230b, 230c),
∘ Abbildung des Motivs mit den markierten Ton- und/oder Farbwerten (30; 130; 230a, 230b, 230c) sowie der Farb- und/oder Tonwertskala (132, 134; 232; 234) auf dem Materialabschnitt,
▪ Bereitstellen eines transparenten Arbeitselements (16; 116; 316),
▪ Verbinden der Unterlage (20; 120a, 120b; 220; 320) und des transparenten Arbeitselements (16; 116; 316).

15. Verfahren nach Anspruch 14, **dadurch gekennzeichnet, dass** das Motiv (13; 113; 213) in abstrahierte Formen zerlegt wird und das Motiv (13; 113; 213) mit den abstrahierten Formen in dem Materialabschnitt abgebildet wird und/oder dass Informationen zum Bildaufbau des Motivs (13; 113; 213) bereitgestellt werden.
